# EUROPÄISCHE PATENTSCHRIFT

(11) **EP 3 197 811 B1**
(45) Veröffentlichungstag und Bekanntmachung des Hinweises auf die Patenterteilung: **18.07.2018**
(21) Anmeldenummer: 15763524.4
(22) Anmeldetag: 03.09.2015
(51) Int. Cl.: B66B 1/32, B66B 5/18

(54) **AUFZUGBREMSE**
ELEVATOR BRAKE
FREIN D'ASCENSEUR

(30) Priorität: 24.09.2014 EP 14186211
(43) Veröffentlichungstag der Anmeldung: 02.08.2017
(73) Patentinhaber: Inventio AG, 6052 Hergiswil (CH)
(72) Erfinder: BITZI, Raphael, CH-6006 Luzern (CH); MEIER, Tobias, CH-5627 Besenbüren (CH)
(86) Internationale Anmeldenummer: PCT/EP2015/070152
(87) Internationale Veröffentlichungsnummer: WO 2016/045934

(56) Entgegenhaltungen:
- EP-A1- 1 671 912
- EP-A1- 2 058 262
- WO-A1-2014/077813
- CN-A- 101 456 522
- US-A- 5 791 442

## Beschreibung

Die vorliegende Erfindung betrifft eine Aufzugbremse zum Bremsen und Halten einer Aufzugskabine in einer Aufzugsanlage und eine entsprechend ausgeführte Aufzugsanlage.

Die Aufzugsanlage dient dem im Wesentlichen vertikalen Transport von Personen und Gütern über mehrere Etagen eines Gebäudes. Die Aufzugsanlage umfasst dazu zumindest eine Aufzugskabine. Diese Aufzugskabine ist mittels Führungsschienen geführt uns sie wird mittels einer Aufzugsmaschine entlang dieser Führungsschienen verfahren. Weiter verfügt die Aufzugsanlage über zumindest eine Aufzugsbremse.

Die Aufzugsbremse erfüllt unterschiedliche Anforderungen. Im Regelfall ist die Aufzugsbreme als Haltebremse verwendet, welche die Aufzugskabine während einer Stillstandphase festhält. Stillstandphasen treten auf, wenn die Aufzugskabine in einer Haltestelle steht und der Antriebsmotor abgeschaltet ist oder wenn die Aufzugsanlage ausser Betrieb ist. Zusätzlich wird die Aufzugsbremse auch als Notbremse eingesetzt, um die Aufzugskabine im Fehlerfall abzubremsen und stillzusetzen. Derartige Fehlerfälle sind beispielsweise ein unerwartetes Betätigen einer Türe des Aufzugs während einer Fahrt oder auch ein Defekt einer kritischen elektronischen Bauteils, usw. Im Weiteren werden Aufzugsbremsen auch als sogenannte Fangbremsen eingesetzt. Fangbremsen haben beispielsweise die Aufgabe die Aufzugskabine bei einem Reissen von Tragmitteln abzubremsen und zu halten.

Abhängig von der Art der Anforderung muss die Aufzugsbremse sanft zur Wirkung gebracht werden oder sie muss beispielsweise bei einem Reissen der Tragmittel sehr schnell zur Wirkung gebracht werden. Auch eine geforderte Bremsleistung ist je nach Anforderung unterschiedlich. Üblicherweise sind deswegen unterschiedliche Bremsen im Aufzug eingebaut. So ist beispielsweise eine üblicherweise elektromagnetische Haltebremse beim Antrieb zusammen mit einer Fangvorrichtung an der Aufzugskabine verwendet. Die elektromagnetische Haltebremse ist hierbei als Halte- und Notbremse und die Fangvorrichtung ist als Fangbremse eingesetzt.
Aus der Anmeldung EP1671912 ist eine an der Aufzugskabine eingesetzte Bremse bekannt, die im Bedarfsfall alle drei Bremsfunktionen wahrnehmen kann.
Aus der europäische Veröffentlichung EP2058262 ist eine weitere Bremse bekannt, welche einerseits eine kontrollierte Einstellung einer Lüftkraft ermöglicht und welche andererseits durch Ausklinken des Lüftapparates eine schnelle Bremsung ermöglicht.

Im Stand der Technik beispielsweise in der US 5791442 sind Bremsen für Aufzüge mit zwei symmetrischen Betätigungseinrichtungen bekannt, welche jeweils einem Bremsbelag zugeordnet sind und welche ausgelegt sind, um den jeweils zugeordneten Bremsbelag im Bedarfsfall gegen den anderen Bremsbelag zu bewegen und den Bremssteg oder die Bremsscheibe zwischen den beiden Bremsbelägen zu klemmen.

Dementsprechend stellt sich eine Aufgabe eine Aufzugsbremse bereitzustellen, die zumindest die drei genannten Bremsfunktionen wahrnehmen kann und die einfach angesteuert werden kann.

Eine derartige Aufzugbremse ist zum Bremsen und Halten einer Aufzugskabine in einer Aufzugsanlage vorgesehen. In einem Lösungsvorschlag beinhaltet die Aufzugbremse einen zweiten und einen ersten Bremsbelag. Zwischen dem zweiten und dem ersten Bremsbelag weist die Aufzugsbremse einen Abstand zur Aufnahme eines Bremsstegs einer Führungsschiene der Aufzugskabine oder einer Bremsscheibe eines Aufzugsantriebs auf. Die Aufzugsbremse beinhaltet eine zweite Betätigungseinrichtung, welche ausgelegt ist, um den zweiten Bremsbelag im Bedarfsfall gegen den ersten Bremsbelag zu bewegen und den Bremssteg oder die Bremsscheibe zwischen dem zweiten und ersten Bremsbelag einzuklemmen und zu bremsen. Die Aufzugsbremse beinhaltet weiter eine erste Betätigungseinrichtung, welche ausgelegt ist, um den ersten Bremsbelag gegen den zweiten Bremsbelag zu bewegen und dementsprechend den Bremssteg oder die Bremsscheibe zwischen dem ersten und zweiten Bremsbelag einzuklemmen und zu bremsen.

Die Bremse beinhaltet somit im Grundsatz zwei Funktionseinheiten, welche im Wesentlichen unabhängig voneinander betätigt werden, unabhängig geprüft werden können und welche in Ihrer Funktion von der anderen Funktionseinheiten oder Betätigungseinrichtung im Wesentlichen unabhängig sind. Im Wesentlichen bedeutet, dass zumindest die Funktion des Auslösens des Bremsens unabhängig voneinander erfolgen kann. Die beiden Betätigungseinrichtungen arbeiten nach unterschiedlichen Arbeitsprinzipien.
Diese Lösung hat den Vorteil, dass die Art der beiden Betätigungseinrichtungen unabhängig voneinander gestaltet werden können. Der erste und zweite Bremsbelag beziehungsweise Betätigungseinrichtung sind natürlich austauschbar. Die Bezeichnung Erster und Zweiter bestimmt in den Erläuterungen keine Reihenfolge. Das Vorhandensein eines zweiten Teils bedingt beispielsweise nicht zwingend ein erstes Teil.

Gemäss dem Lösungsvorschlag beinhaltet die zweite Betätigungseinrichtung eine zweite Zustelleinrichtung, welche den zweiten Bremsbelag im Bedarfsfall von einer Bereitschaftsstellung zum Bremssteg oder zur Bremsscheibe zustellen und anpressen kann und weiter beinhaltet die zweite Betätigungseinrichtung eine zweite Rückstelleinrichtung, welche den zweiten Bremsbelag wiederum von der zugestellten Position in seine Bereitschaftsstellung zurückstellen kann. Vorzugsweise sind die zweite Zustelleinrichtung und die zweite Rückstelleinrichtung durch eine Baugruppe gebildet, welche in der Lage ist den zweiten Bremsbelag zuzustellen und zuzudrücken und dann auch wieder zurückzustellen. Die zweite Betätigungseinrichtung arbeitet somit nach einem zweiten Arbeitsprinzip indem die zweite Betätigungseinrichtung eine Zu- und Wegstelleinrichtung beinhaltet um den zweiten Bremsbelag im Bedarfsfall von einer Bereitschaftsstellung zum Bremssteg oder zur Bremsscheibe zuzustellen, anzupressen und wiederum zurückzustellen.

Dies ist vorteilhaft, da mittels dieser zweiten Betätigungseinrichtung die Bremse gesteuert aktiviert und auch wieder deaktiviert werden kann. Sie ist somit hervorragend als Halte- und allenfalls als Notbremse geeignet. Die beiden Betätigungseinrichtungen können somit auf unterschiedliche Bremsanforderungen ausgelegt werden.

Vorzugsweise beinhaltet die zweite Zustelleinrichtung eine Zustellregelung, mittels derer eine Zustellkraft zumindest in Stufen gesteuert oder geregelt werden kann. Dies ist vorteilhaft, da damit die Aufzugsbremse je nach Beladungszustand der Aufzugskabine und einem dementsprechenden Bremsbedarf angesteuert werden kann.

Vorzugsweise beinhaltet die zweite Zustelleinrichtung einen Spindeltrieb, und dieser Spindeltrieb ist vorzugsweise mittels Elektromotor getrieben. Der Spindeltrieb ist vorzugsweise selbsthemmend ausgeführt, so dass er eine jeweils eingestellte Zustellposition ohne Zufuhr von Energie beibehalten kann.

Elektromotoren sind einfach verfügbar und mittels des Spindeltriebs kann der zweite Bremsbelag schnell zu- und weggestellt werden. Bedarfsweise kann der Elektromotor natürlich mittels Getriebe zur Spindel verbunden sein. Damit kann der Motor selbst klein gehalten werden. Die selbsthemmende Ausführung des Spindeltriebs ermöglicht, dass eine eingestellte Zustell- oder Bremskraft ohne weitere Zufuhr von Energie gehalten werden kann.

Gemäss dem Lösungsvorschlag beinhaltet die erste Betätigungseinrichtung eine erste Zustelleinrichtung mit einem Energiespeicher, wobei die erste Zustelleinrichtung bei Freigabe einer im Energiespeicher gespeicherten Energie den ersten Bremsbelag zum Bremssteg oder zur Bremsscheibe zustellt und anpresst. Die Funktionalität der ersten Betätigungseinrichtung besteht demzufolge darin, dass eine Energie bereitgestellt ist, die auf Abruf hin bereitsteht und die den ersten Bremsbelag schnell zur Wirkung bringen kann. Die erste Zustelleinrichtung kann auch als Zustellmechanik bezeichnet werden, da sie vorzugsweise oder zumindest mehrheitlich mechanische Elemente beinhaltet. Die erste Betätigungseinrichtung arbeitet somit nach einem zum zweiten Arbeitsprinzip unterschiedlichen ersten Arbeitsprinzip, indem die erste Zustelleinrichtung den Energiespeicher beinhaltet, welcher bei Freigabe der im Energiespeicher gespeicherten Energie den ersten Bremsbelag zum Bremssteg oder zur Bremsscheibe zustellt und anpresst.

Dies ist vorteilhaft, da eine derartige Ausführung geeignet ist beispielsweise bei einem Seilriss schnell und sicher zur Wirkung gebracht zu werden und dementsprechend schnell bremsen zu können. Hierbei ist zu bemerken, dass bei einem Seilriss eine Fallgeschwindigkeit der Aufzugskabine sehr schnell ansteigt. Deswegen ist die vorgenannte Ausführung besonderes nutzbringend, da die Aufzugsbremse mittels der gespeicherten Energie beispielsweise einer gespannten Feder oder auch einer Druckpatrone sehr schnell zur Wirkung gebracht werden kann.

Vorzugsweise umfasst die erste Betätigungseinrichtung eine erste Rückstelleinrichtung. Die erste Rückstelleinrichtung beinhaltet beispielsweise einen Spannbolzen der zumindest direkt oder indirekt auf den Energiespeicher der ersten Zustelleinrichtung einwirken kann. Dieser Spannbolzen kann in einer Ausführung entweder aktiv mittels eines pneumatischen, hydraulischen, elektromotorischen oder magnetischen Hubmittels betätigt werden oder er kann alternativ, in einer einfachen Ausführung, manuell mittels eines Spannhebels betätigt werden. Über den Spannbolzen kann in dieser Ausführung auf jeden Fall der Energiespeicher zusammen mit der zugehörigen ersten Zustelleinrichtung und dem erste Bremsbelag in seine gespannte Bereitschaftsstellung zurückgedrückt werden.

Dies ist vorteilhaft da je nach Komfortansprüchen eine geeignete Rücksetzung der ersten Betätigungseinrichtung eingerichtet werden kann. Hierbei ist zu beachten, dass ein Seilriss in einer Aufzugsanlage eigentlich nie gebraucht wird und dass dementsprechend auch diese Funktion der Aufzugsbremse eine "Worst Case" Sicherung entsprechend einer Schwimmweste im Flugzeug darstellt. Dementsprechend kann für eine Rücksetzung dieser ersten Betätigungseinrichtung in der Regel ein entsprechender manueller Aufwand akzeptiert werden. Teilweise wird diese Schnellfunktionalität der Aufzugsbremse jedoch auch bei anderem Bedarf - Überladung, überfahren einer Haltestelle, Servicebetrieb - zum Einsatz gebracht werden. Dazu sind dann fernrücksetzbare erste Rückstelleinrichtungen unter Verwendung der genannten beispielhaften pneumatischen, hydraulischen, elektromotorischen oder magnetischen Hubmittel nützlich.
Vorzugsweise umfasst die erste Zustelleinrichtung der ersten Betätigungseinrichtung eine vorzugsweise elektro- magnetische Halte- oder Klinkeneinrichtung, welche den Energiespeicher in geladenem Zustand halten und im Bedarfsfall freigeben kann.
Dies ist vorteilhaft, da eine Halte- oder Klinkeneinrichtung mittels einer Klinke hervorragend geeignet ist, um eine Einrichtung mit wenig Kraft zu halten und bei Bedarf schnell freizugeben. Eine Verwendung eines Elektromagneten zum Halten oder zum Auslösen der Klinke ist eine erprobte und kostengünstige Lösung. Dabei ist sowohl eine aktive Rückhaltung (Fail-safe) oder eine passive Rückhaltung machbar. Bei einer aktiven Rückhaltung hält der bestromte Elektromagnet die Klinke im Eingriff und bei Wegfall gibt die Klinke den Energiespeicher frei. Dies ist von Vorteil, da bei einem Wegfall der elektrischen Versorgung oder einem Drahtbruch, etc. die Klinke selbsttätig freigegeben wird. Bei einer passiven Rückhaltung ist die Klinke bei nicht-bestromtem Elektromagnet im Eingriff und zur Freigabe der Klinke wird der Elektromagnet zumindest kurzzeitig bestromt, um die Klinke freizugeben. Diese Variante kann mit wenig elektrischer Energie betrieben werden , jedoch sind spezielle Vorkehrungen zu treffen, damit beispielsweise bei einem Defekt eines Magneten dies festgestellt und geeignete Massnahmen getroffen werden können.
Vorzugsweise beinhaltet der Energiespeicher der ersten Zustelleinrichtung einen Federspeicher und der erste Bremsbelag oder ein entsprechendes Bremsgehäuse ist derart gestaltet, dass erste Bremsbelag in seiner Bereitschaftsstellung im Wesentlichen an einem Anschlag anliegt, so dass eine von der zweiten Betätigungseinrichtung über den zweiten Bremsbelag bewirkte Spannkraft über den Anschlag in eine Bremsgehäuse der Aufzugsbremse übertragen werden kann. Bei einer durch die zweite Betätigungseinrichtung initialisierten Bremsung ist somit die erste Betätigungseinrichtung nicht belastet. Sie kann dementsprechend auf eine geringe Anzahl Lastzyklen ausgelegt werden.

Vorzugsweise ist die zweite Zustelleinrichtung des zweiten Bremsbelags derart ausgestaltet, dass sie den ersten Bremsbelag - nach einer Betätigung desselben - zusammen mit der zugehörigen Zustell- Mechanik und dem Energiespeicher in ihre gespannte Bereitschaftsstellung zurückdrücken kann und dass sie so den ersten Bremsbelag zurücksetzen kann. Damit kann nach einer Schnellbetätigung der Aufzugsbremse mittels der ersten Betätigungseinrichtung diese und die zugehörige erste Zustelleinrichtung wieder in die gespannte Bereitschaftsstellung gedrückt werden. Damit kann eine spezielle zusätzliche Einrichtung zur Zurückstellung der ersten Betätigungseinrichtung eingespart werden. Nach dem Zurückdrücken der ersten Betätigungseinrichtung muss lediglich die Klinke aktiviert werden, um die erste Betätigungseinrichtung zu halten.

In einer alternativen Ausführung beinhaltet die vorzugsweise elektromagnetische Halte- oder Klinkeneinrichtung mehrere Elektromagnete, welche mittels einer Hebelübersetzung auf den Spannbolzen und somit direkt oder indirekt auf den Energiespeicher der ersten Zustelleinrichtung einwirken können. Mehrere Elektromagnete erlauben eine Verwendung kleinerer Magnete. Dies kann kostengünstiger sein und ergibt mehr Flexibilität in der Anordnung derselben. Zudem kann damit beispielsweise ein Ausfall eines einzelnen der Magneten kompensiert werden. Eine derartige elektromagnetische Halte- oder Klinkeneinrichtung kann natürlich nicht nur für die vorgängig beschriebene Aufzugsbremse verwendet werden, sondern sie können auch für andersartige Aufzugsbremsen eingesetzt werden.

In einer ergänzenden Ausführung sind die mehreren Elektromagnete ausgelegt, um den Spannbolzen und den Energiespeicher von einer betätigten Lage, bei der der erste Bremsbelag zum Bremssteg oder zur Bremsscheibe zugestellt ist, in seine gespannte Bereitschaftsstellung zurückzubewegen und so den ersten Bremsbelag zurückzusetzen. Dies bedingt natürlich eine Auslegung der Elektromagnete auf eine höhere Leistung, da effektive Spannarbeit geleistet werden muss, jedoch können die ohnehin vorhandenen Magnete verwendet werden.

Vorteilhafterweise ist hierbei eine Teilmenge der mehreren Elektromagnete ausgelegt, um den Spannbolzen und den Energiespeicher in seiner gespannten Bereitschaftsstellung zu halten und so den ersten Bremsbelag vom Bremssteg oder der Bremsscheibe in einer vorbestimmten oder einstellbaren Distanz zu halten. Die Teilmenge der mehreren Elektromagnete beinhaltet vorteilhafterweise eine vorbestimmte Anzahl Elektromagnete, wobei diese Anzahl ein einziger dieser mehreren Elektromagnete aber auch mehrere davon sein kann. Auf jeden Fall umfasst die Teilmenge nicht alle der mehreren Elektromagnete. Die Teilmenge muss selbstverständlich nicht immer dieselbe sein. Die Teilmenge kann variiert werden, womit eine Prüfung des Leistungsvermögens ermöglicht ist.
Auf jeden Fall können zum Rückstellen der ersten Betätigungseinrichtung alle Magnete aktiviert werden, um eine entsprechend grosse Spannkraft zu erzeugen, während dann zum Halten lediglich wenige oder sogar nur ein einzelner - also die Teilmenge - der mehreren Elektromagnete genügt. Vorteilhafterweise sind der oder die Magnet(e) unterschiedlich. So sind beispielsweise die zum Spannen benötigten Magnete als Hub- oder Linearmagnet gestaltet und die zum Halten benutzten Magnete sind als Haftmagnet ausgebildet. Dies hat den Vorteil, das mittels der Hubmagnete eine grosse Spannarbeit verrichtet werden kann, währen zum Halten die Haftmagnete mit geringer elektrischer Energie betrieben werden können.
In einer Ausführungsvariante umfasst die elektromagnetische Halte- oder Klinkeneinrichtung ein Zugmittel, welches den ersten Bremsbelag in seiner gespannten Bereitschaftsstellung halten kann und dieses Zugmittel ist um einen Poller oder eine Spill gelegt beziehungsweise umschlingt diese. Ein loses Ende des Zugmittels ist hierbei mittels des mindestens einen Elektromagneten gehalten. Damit kann eine Haltekraft des Elektromagneten minimiert werden.

Vorzugsweise ist die Aufzugsbremse wie sie in den vorgängigen Variationen beschrieben ist an der Aufzugskabine angeordnet. Die Aufzugskabine ist entlang von Führungsschienen geführt und die Aufzugsbremse ist derart angeordnet, dass der Bremssteg, der vorzugsweise zugleich einem Führungssteg der Führungsschiene entspricht, im Zwischenraum zwischen dem zweiten und dem ersten Bremsbelag der Aufzugsbreme angeordnet ist. Vorteilhafterweise sind mindestens zwei Aufzugsbremsen an der Aufzugskabine angeordnet, so dass sie je mit einer von zwei beidseitig der Aufzugskabine angeordneten Führungsschienen zusammenwirken können. Damit kann eine Belastung symmetrisch verteilt werden.
Vorteilhafterweise weist die Aufzugbremse eine Zentriereinrichtung auf, welche die unbetätigte Aufzugsbremse in einer unbetätigten Lage zentriert, so dass der zweite und der erste Bremsbelag in einer vorbestimmten oder einstellbaren Distanz von der Führungsschiene angeordnet sind. Weiter ist die Aufzugbremse vorteilhafterweise seitlich verschiebbar an der Aufzugskabine befestigt, so dass sie sich unter Wirkung einer von der zweiten und/oder ersten Betätigungseinrichtung der Aufzugsbremse erzeugten Anpressung zur Führungsschiene ausrichten kann. Damit können Querkräfte auf die Kabine und das Schienensystem minimiert werden.
Üblicherweise beinhaltet die Aufzugsanlage eine Aufzugssteuerung zur Steuerung des Aufzugs im Normalbetrieb. Weiter beinhaltet die Aufzugsanlage vorteilhafterweise weiter eine Überwachungseinrichtung zur Überwachung eines ordnungsgemässen Betriebs der Aufzugsanlage. Vorzugsweise steuert die Aufzugssteuerung im Normalbetrieb ausschliesslich die zweite Betätigungseinrichtung der Aufzugsbremse und die Überwachungseinrichtung betätigt bei Feststellung eines Fehlverhaltens die erste Betätigungseinrichtung. In der Regel initialisiert die Überwachungseinrichtung bei Feststellung eines Fehlverhaltens im Sinne eines Fail Safe Systems ebenfalls die zweite Betätigungseinrichtung, unabhängig davon ob diese schon durch die Aufzugssteuerung betätigt wurde. Abhängig von einer Art des Fehlverhaltens kann dabei die Überwachungseinrichtung beispielsweise in einer ersten Aktion lediglich die zweite Betätigungseinrichtung ansteuern, um die Aufzugsbremse beziehungsweise die zweite Betätigungseinrichtung zu aktivieren und sie kann dann, sofern eine erwartete Bremsung des Aufzugs ausbleibt in einer Folgeaktion auch die erste Betätigungseinrichtung aktivieren. Damit kann eine Fehlergerechtes reagieren der Aufzugsanlage auf ein fehlerhaftes Verhalten der Anlage erfolgen.

Die Erfindung wird nachfolgend anhand von Ausführungsbeispielen im Zusammenhang mit den beiliegenden Figuren näher erläutert. Die Figuren zeigen:
- Figur 1: eine schematische Seitenansicht einer beispielhaften Aufzugsanlage;
- Figur 2: einen Querschnitt der Aufzugsanlage von Figur 1;
- Figur 3: eine Prinzipdarstellung einer ersten Ausführung einer Aufzugsbremse;
- Figur 4a: eine schematische Darstellung einer möglichen ersten Zustelleinrichtung für die erste Betätigungseinrichtung in einer gespannten Bereitschaftsstellung;
- Figur 4b: die erste Zustelleinrichtung von Figur 4a in einer betätigten Lage;
- Figur 5a: eine schematische Darstellung einer elektromagnetische Halte- und Klinkeneinrichtung für die erste Betätigungseinrichtung in einer gespannten Bereitschaftsstellung;
- Figur 5b: die elektromagnetische Halte- und Klinkeneinrichtung von Figur 5a in einer betätigten Lage;
- Figur 5c: eine Magnetanordnung für die elektromagnetische Halte- und Klinkeneinrichtung von Figur 5a;
- Figur 6: eine andere Magnetanordnung für die elektromagnetische Halte- und Klinkeneinrichtung;
- Figur 7: eine Prinzipdarstellung einer weiteren Ausführung einer Aufzugsbremse;
- Figur 8: die Aufzugsbremse von Figur 7 mit betätigter erster Betätigungseinrichtung;
- Figur 9: die Aufzugsbremse von Figur 7 mit betätigter zweiter Betätigungseinrichtung .

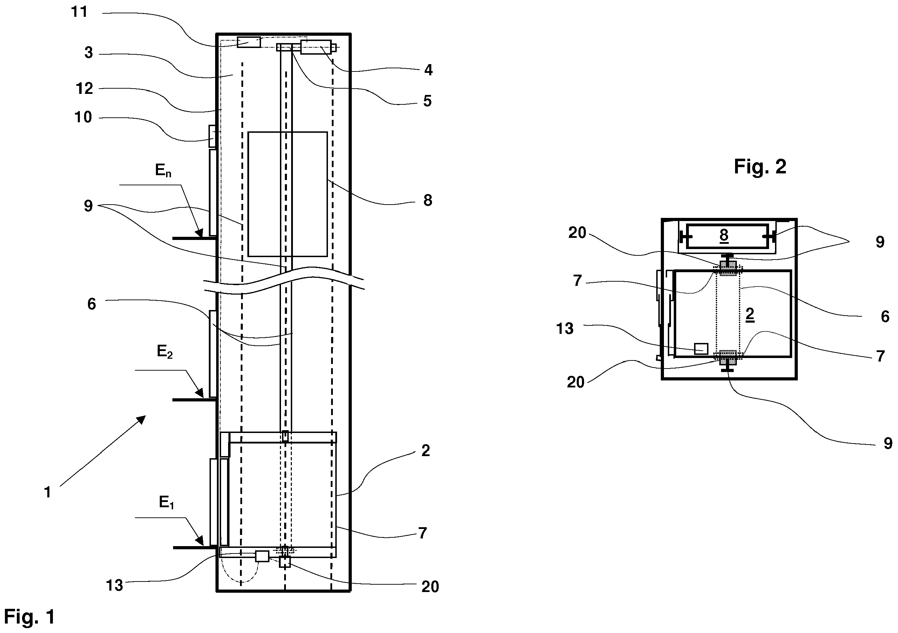

In der Figur 1 ist schematisch ein Aufzugschacht 3 eines Aufzugssystems 1 dargestellt. Das Aufzugssystem 1 umfasst eine Aufzugskabine 2, welche sich an einer Etage E₁ befindet. Weitere Etagen des Aufzugschachtes 3 sind mit E₂ bis Eₙ dargestellt. Das Aufzugssystem 1 der Figur 1 ist als Traktionsaufzugssystem mit einem Gegengewicht 8 ausgebildet, wobei Tragmittel 6 die Aufzugskabine 2 und das Gegengewicht 8 miteinander verbinden und tragen. Die Tragmittel 6 sind unter der Aufzugskabine 2 mittels Tragrollen 7 geführt und werden von einer Treibscheibe 5 einer Antriebsmaschine 4 bedarfsweise getrieben. Als Tragmittel 6 sind üblicherweise Seile oder Riemen verwendet. Eine Aufzugssteuerung 10 ermittelt und steuert die Aufzugsanlage 1. Sie übermittelt einer Antriebssteuerung 11 erforderliche Fahrbefehle und die Antriebssteuerung 11 steuert dementsprechend die Antriebsmaschine 4.

Im Aufzugschacht 3 sind ferner Führungsschienen 9 für die Aufzugskabine 2 und das Gegengewicht 8 vorhanden, welche der Führung und Stabilisierung der Aufzugskabine 2 beziehungsweise des Gegengewichts 8 dienen. Die Aufzugskabine 2 ist mit einer Aufzugsbremse 20 ausgestattet, welche sich unter der Aufzugskabine 2 befindet.

Die Figur 2 zeigt das Aufzugssystem 1 schematisch von oben. Gut ersichtlich sind die Führungsschienen 9, welche jeweils paarweise die Aufzugskabine 2 und das Gegengewicht 8 führen.

In diesem Ausführungsbeispiel sind zwei Aufzugsbremsen 20 seitlich, unterhalb der Aufzugskabine 2 angeordnet. Die zwei Aufzugsbremsen 20 wirken mit jeweils einer Führungsschiene 9 zusammen zum Bremsen und Halten der Aufzugskabine 2. Die Führungsschiene 9 weist einen Bremssteg 9a auf der zum Zusammenwirken mit der Aufzugsbremse ausgestaltet ist. Die Aufzugsbremsen 20 sind als Halte-, Not- und Fangbremse ausgestaltet. Eine gesonderte Fangvorrichtung ist nicht vorgesehen. Die Aufzugsbremse 20 wird einerseits von der Aufzugssteuerung 10 im Normalbetrieb gesteuert. Sie steuert die Aufzugsbremse an, um die Aufzugskabine 2 zu halten, wenn die Aufzugskabine 2 beispielsweise in einer Etage E1 bis En steht oder sie initialisiert eine Notbremsung, wenn beispielsweise unerwartet eine Tür geöffnet wird oder wenn ein anderer Fehler festgestellt wird. Weiter befindet sich an der Aufzugskabine 2 eine Überwachungseinrichtung 13. Diese Überwachungseinrichtung überwacht den Bewegungsverlauf der Aufzugskabine 2 und sie steuert die Aufzugsbremse 20 an, wenn beispielsweise ein Tragmittel 6 reisst. Die Steuerungseinheiten wie Aufzugssteuerung 10, Antriebssteuerung 11, Überwachungseinrichtung 13 sowie benötigte Sensoren, Schalter und weitere Steuereinrichtungen sind über Signalleitungen 12 oder Bussysteme miteinander verbunden. Die verschiedenen Steuerungen können natürlich auch zu gemeinsamen Steuerungen zusammengefasst sein.

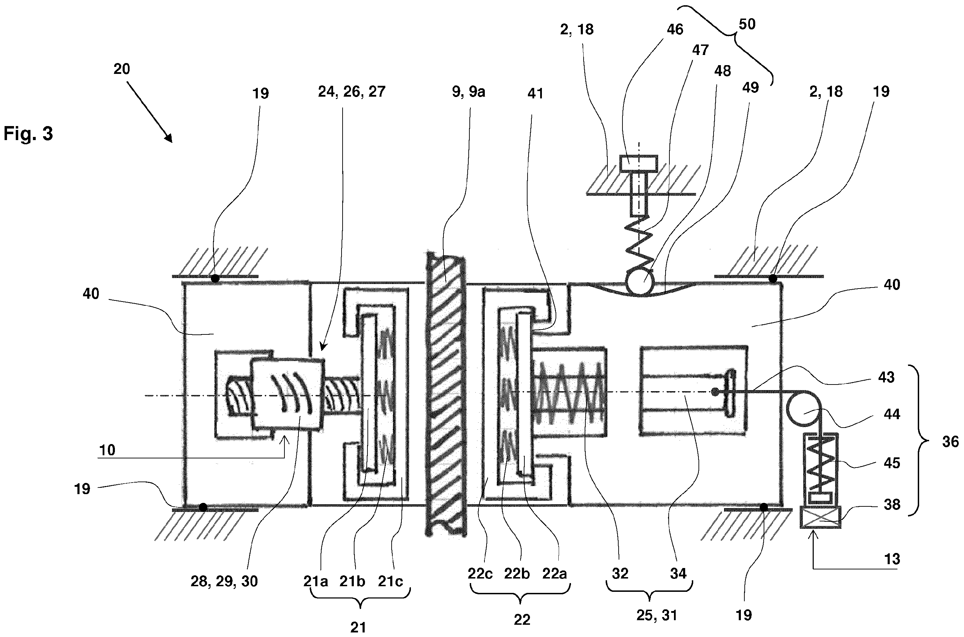

Figur 3 zeigt eine Ausführung einer Aufzugsbremse 20, wie sie in der vorgängig beschriebenen Aufzugsanlage verwendet werden kann. Die Aufzugbremse 20 zum Bremsen und Halten einer Aufzugskabine in einer Aufzugsanlage beinhaltet einen zweiten Bremsbelag 21 und einen ersten Bremsbelag 22. Die Bremsbeläge 21, 22 sind in einem Bremsgehäuse 40 der Aufzugsbremse 20 angeordnet. Ein Abstand zwischen den beiden Bremsbelägen 21, 22 ist derart eingestellt, dass der Bremssteg 9a der Führungsschiene 9 dazwischen so angeordnet werden kann, dass bei unbetätigter Stellung der Aufzugsbremse 20 der Bremssteg nicht geklemmt ist. Die unbetätigte Stellung der Aufzugsbremse wird auch als Bereitschaftsstellung bezeichnet. Der Abstand entspricht hierbei einer Breite des Bremsstegs 9a zuzüglich eines Durchfahrtsspiels von etwa 2 mal 1.5 bis 3 Millimeter. In dieser Bereitschaftsstellung kann die Aufzugskabine von der Antriebsmaschine ungehindert verfahren werden.
Die beiden Bremsbeläge 21, 22 sind im Ausführungsbeispiel mehrteilig ausgeführt. Sie bestehen jeweils aus einer Druckplatte 21a, 22a, einer elastischen Zwischenlage 21b, 22b und einem Reibbelag 21c, 22c. Mittels der elastischen Zwischenlage kann beispielsweise eine Aufschlaggeräusch der Bremsbeläge 21, 22 auf den Bremssteg 9a reduziert werden. Als elastische Zwischenlage 21b, 22b kann eine Kunststoffeinlage, eine Federanordnung oder beispielsweise ein eingelegter Gummiring / O-Ring verwendet werden. Im Beispiel sind beide Bremsbeläge 21, 22 mehrteilig ausgeführt. Selbstverständlich kann auch lediglich einer der beiden Bremsbeläge 21, 22, beispielsweise der zweite Bremsbelag 21, mehrteilig ausgeführt sein.
Der zweite Bremsbelag 21 ist mittels einer zweiten Betätigungseinrichtung 24 im Bremsgehäuse 40 angeordnet und bewegbar. Die zweite Betätigungseinrichtung 24 arbeitet nach einem zweiten Arbeitsprinzip und ist im Ausführungsbeispiel als zweite Zustelleinrichtung 26 und zugleich als zweite Rückstelleinrichtung 27 ausgeführt. Mittels eines Elektromotors 30, der einen Spindeltrieb 29 treibt wird der zweite Bremsbelag 21 im Bedarfsfall über eine Zustellregelung 28 zugestellt und auch wieder zurückgestellt. Der Elektromotor 30 kann direkt oder mittels Getriebe auf den Spindeltrieb 29 einwirken.
Der erste Bremsbelag 22 ist mittels einer ersten Betätigungseinrichtung 25 im Bremsgehäuse 40 angeordnet und bewegbar. Die erste Betätigungseinrichtung 25 arbeitet nach einem ersten Arbeitsprinzip und beinhaltet im Ausführungsbeispiel eine erste Zustelleinrichtung 31. Die erste Zustelleinrichtung 31 besteht im Wesentlichen aus einem Energiespeicher 32, beispielsweise in der Form einer Druckfeder. Der Energiespeicher 32 wird über einen Spannbolzen 34 mittels einer Halte- und Klinkeneinrichtung 36 in einer Bereitschaftsstellung gehalten. Die Halte- und Klinkeneinrichtung 36 besteht im dargestellten Beispiel aus einem Zugmittel 43, welches zum Spannbolzen verbunden ist und welches von einem Elektromagneten 38 gehalten ist. In bestromtem Zustand kann somit der Elektromagnet 38 den ersten Bremsbelag in seiner Bereitschaftsstellung halten. Sobald die Bestromung des Elektromagnets wegfällt, drückt der Energiespeicher 32 den Bremsbelag zu und klemmt damit den Bremssteg 9a fest. Um eine Haltekraft des Elektromagnets 38 klein zu halten, ist das Zugmittel 43 um einen Poller oder Spill 44 geführt. So wird die Haftkraft des Elektromagnets 38 entsprechend der Seilreibungsformel von Euler-Eytelwein erhöht, um eine genügende Spannkraft zum Halten des Energiespeichers bereitstellen zu können.

Eine Zentriereinrichtung 50 hält das Bremsgehäuse 40 bei unbelasteten Bremsbelägen in einer Mittenstellung. Diese Mittenstellung ist derart eingestellt, dass die beiden Bremsbeläge 21, 22 in unbelastetem Zustand, beziehungsweise wenn die Bremsbeläge in ihrer Bereitschaftsstellung sind, symmetrisch in einer Distanz vom Bremssteg 9a positioniert sind. Das Bremsgehäuse 40 ist dazu über Aufnahmen 18 seitlich verschiebbar an der Aufzugskabine 2 befestigbar. Die Aufnahmen 18 sind dazu mit Gleitflächen 19 versehen. Die Aufnahme 18 kann natürlich in einer anderen Konstruktionsart auch mittels Gleitbolzen gemacht sein, auf denen das Bremsgehäuse seitlich verschiebbar gelagert ist. Das Bremsgehäuse weist im Beispiel eine kalottenartige Vertiefung oder Zentriermulde 49 auf. Eine Zentrierkugel 48 wird über eine Zentrierfeder 47, welche mittels einer in Bezug auf die Aufzugskabine 2 beziehungsweise die Aufnahme 18 ortsfesten Einstellschraube 46 vorgespannt ist, in die Zentriermulde 49 gedrückt. Dadurch wird ein seitliches Ausweichen des gesamten Bremsgehäuses 40 ermöglicht und zugleich wird das Bremsgehäuse in kraftlosem Zustand in seiner Mittenstellung zentriert.

Zum Halten der Aufzugskabine im Normalbetrieb oder auch wenn eine Notbremsung erforderlich wird steuert die Aufzugssteuerung 10 die zweite Zustelleinrichtung 26 der zweiten Betätigungseinrichtung 24 an. Der Elektromotor 30 bewegt über den Spindeltrieb 29 den zweiten Bremsbelag 21 in Richtung des Bremsstegs 9a. Sobald der zweite Bremsbelag gegen den Bremssteg 9a drückt, wird das Bremsgehäuse 40 in Richtung der zweiten Betätigungseinrichtung 24 zurückgedrückt (in Figur 3 nach links) wodurch auch der erste Bremsbelag 22 in Kontakt mit dem Bremssteg 9a gebracht wird. Durch weiteres Drehen des Elektromotors 30 wird schlussendlich eine Andrückkraft und entsprechende Bremskraft erzeugt und die Aufzugskabine wird dementsprechend gebremst oder im Stillstand gehalten. Der Spindeltrieb 29 ist vorzugsweise mit geringer Spindelsteigung ausgeführt, so dass eine gewählte Zudrückstellung ohne weitere Energiezufuhr beibehalten wird.

Zum Rückstellen der Aufzugsbremse 20 wird mittels der zweiten Rückstelleinrichtung 27 der Elektromotor 30 zurückgedreht, bis die Bremsbeläge den Bremssteg 9a wiederum freigeben. Die Zentriereinrichtung 50 stellt demnach das Bremsgehäuse 40 wiederum in seine Mittenstellung zurück.

Zum Fangen der Aufzugskabine, wenn beispielsweise die Aufzugskabine droht abzustürzen oder wenn eine unerwartet hohe Fahrgeschwindigkeit festgestellt wird steuert die Überwachungseinrichtung 13 die erste Zustelleinrichtung 31 der ersten Betätigungseinrichtung 25 an. Dabei wird der Elektromagnet 38 stromlos geschaltet und der Energiespeicher stellt den ersten Bremsbelag 22 der Aufzugsbremse schlagartig beziehungsweise sehr schnell zu. Sobald nun der erste Bremsbelag 22 gegen den Bremssteg 9a drückt, wird das Bremsgehäuse 40 in Richtung der ersten Betätigungseinrichtung 25 zurückgedrückt (in Figur 3 nach rechts) wodurch auch der zweite Bremsbelag 21 in Kontakt mit dem Bremssteg 9a gebracht wird. Entsprechend einer eingestellten Andrückkraft des Energiespeichers 32 wird dann der Bremssteg 9a geklemmt und die Aufzugskabine gebremst.

Zum Rückstellen der Aufzugsbremse 20 kann nun die zweite Betätigungseinrichtung 24 benutzt werden. Die zweite Zustelleinrichtung 26 wird angesteuert, um den ersten Bremsbelag 22 zurückzudrücken biss der Bremsbelag 22 an einem Anschlag 41 des Bremsgehäuses 40 anliegt und der Energiespeicher 32 wieder gespannt ist. Die Gegenfeder 45 der Halte- oder Klinkeneinrichtung 36 drückt eine Gegenplatte des Elektromagneten 38 zum Elektromagneten 38. Nach einem Einschalten desselben kann die zweite Betätigungseinrichtung 24 zusammen mit dem zweiten Bremsbelag 22 zurückgefahren werden und die Aufzugsbremse befindet sich wiederum in ihrer Bereitschaftsstellung.

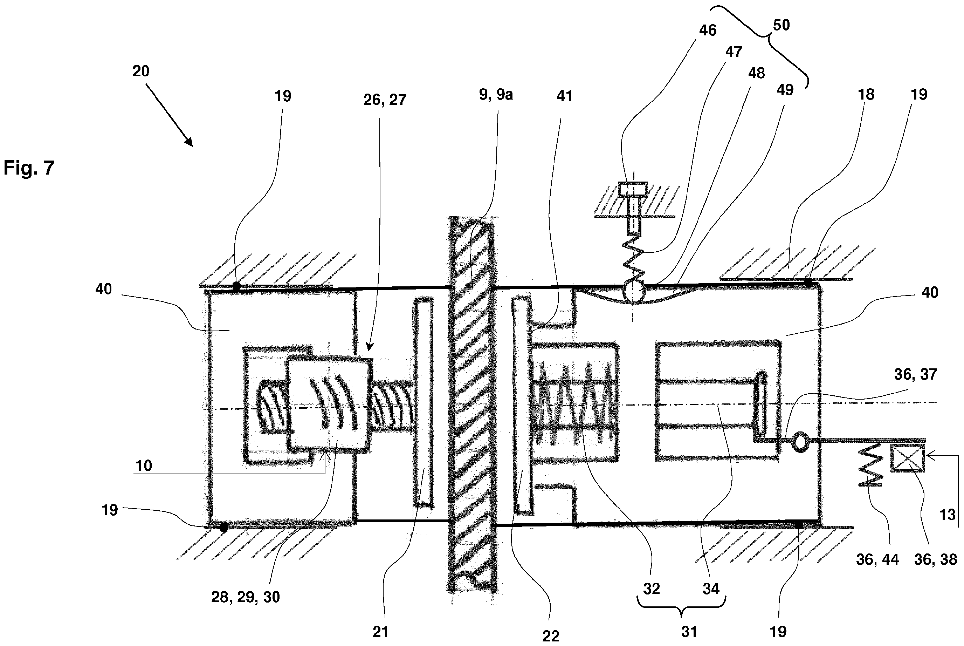

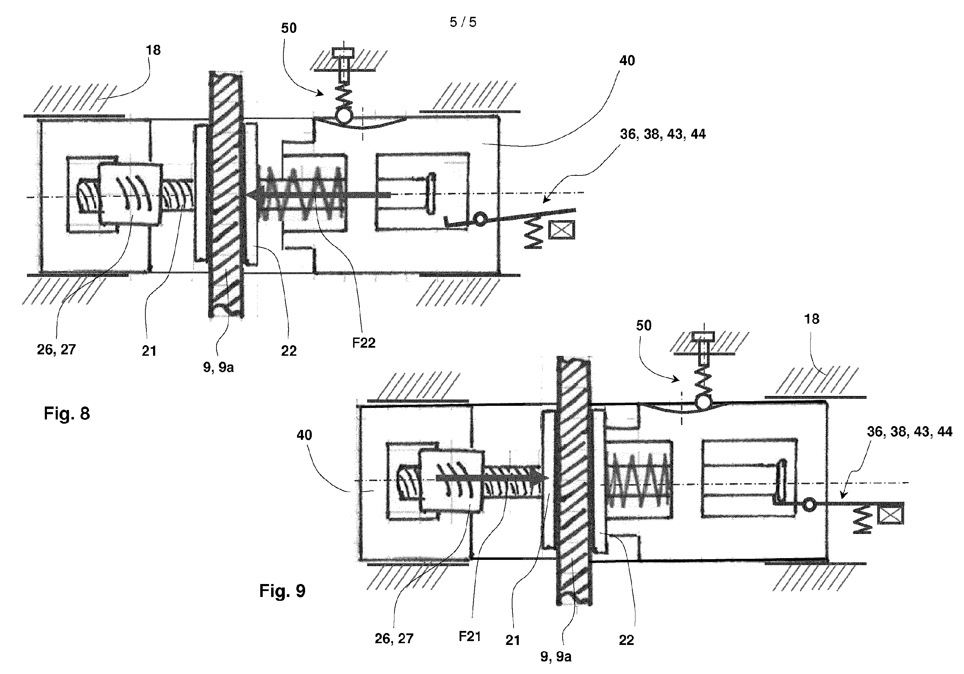

Figur 7 zeigt eine andere Ausführung einer Aufzugsbremse 20, wie sie in der eingangs beschriebenen Aufzugsanlage verwendet werden kann. Im Unterschied zu der Ausführung von Figur 3 sind die zweiten und ersten Bremsbeläge 21, 22 jeweils einteilig ausgeführt. Das Bremsgehäuse 40 ist wie zuvor erläutert gleitend in Aufnahmen 18 geführt und das Bremsgehäuse ist mittels Zentriereinrichtung 50 mittig zum Bremssteg 9a ausgerichtet. Die Halte- und Klinkeneinrichtung 36 ist mittels einer Klinke 37 ausgeführt. Die Klinke 37 ist an einem Ende mittels Elektromagnet 38 gehalten und hält am anderen Ende den Spannbolzen 34 zurück.
Zum Fangen der Aufzugskabine gibt der Elektromagnet 38 die Klinke 37 und damit den Spannbolzen 34 und den Energiespeicher 32 frei. Dadurch wird, wie bereits im Zusammenhang mit Figur 3 erläutert der erste Bremsbelag 22 mit einer durch den Energiespeicher 32 vorbestimmten Andrückkraft F22 gegen den Bremssteg 9a gedrückt, das Bremsgehäuse wird seitlich verschoben, wodurch der Bremssteg 9a schlussendlich geklemmt und gebremst wird. Dieser Zustand ist in Figur 8 dargestellt.

Zum Halten der Aufzugskabine im Normalbetrieb oder auch wenn eine Notbremsung erforderlich wird steuert die Aufzugssteuerung 10 die zweite Zustelleinrichtung 26 der zweiten Betätigungseinrichtung 24 an, wie bereits im Zusammenhang mit Figur 3 erläutert. Vom Elektromotor 30 wird schlussendlich, unabhängig von der ersten Betätigungseinrichtung 25, über den Spindeltrieb 29 eine Andrückkraft F21 und die entsprechende Bremskraft erzeugt und die Aufzugskabine wird dementsprechend gebremst oder im Stillstand gehalten. Dieser Zustand ist in Figur 9 dargestellt. Die gleiche Arbeitsstellung, wie in Figur 9 dargestellt, stellt sich natürlich auch ein, wenn die Aufzugsbremse 20 nach einer Betätigung mittels der ersten Betätigungseinrichtung durch die zweite Betätigungseinrichtung zurückgestellt wird.

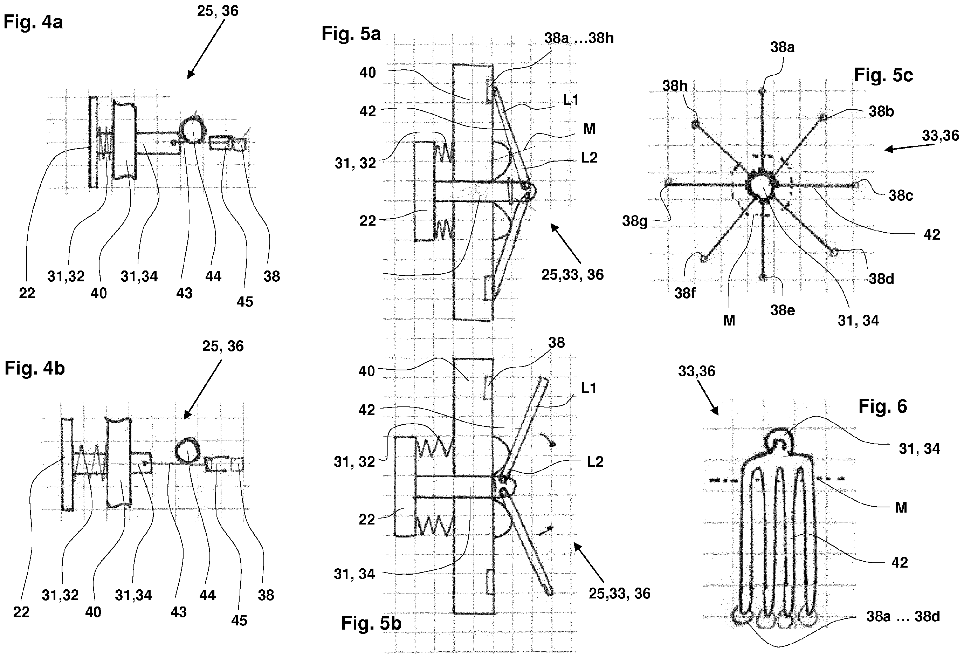

Die Halte- und Klinkeneinrichtung 36 der ersten Betätigungseinrichtung 25 kann wie im Rahmen von Figur 3 erläutert unter Zuhilfenahme eines Spills oder eines Pollers optimiert werden. In der Bereitschaftsstellung der Aufzugsbremse 20, hält der Elektromagnet 38 das Zugmittel 43 fest. Das Zugmittel ist beispielswiese zweimal (720°) um den Poller gewickelt. So kann mittels eines Elektro-Haftmagnets 38 von etwa 250 Newton Haltekraft eine Rückhaltekraft von etwa 13 Kilo-Newton (bei einem Poller-Reibwert von etwa 0.4) erreicht werden. Wird der Elektromagnet 38 stromlos geschaltet, wie in der Figur 4b gezeigt, kann der gespannte Energiespeicher den Bremsbelag 22 schnell zustellen. Das Zugmittel 43 wird durch die geringe Gegenfeder 45 unter Spannung gehalten, so dass die Gegenplatte des Elektromagneten 38 beim Zurückstellen wieder in Kontakt mit dem Elektromagneten gebracht wird.

In den Figuren 5a bis 5c ist eine weitere Alternative für die Halte- und Klinkeneinrichtung 36 vorgestellt. Die Bremsplatte 22 ist in Figur 5a mittels Energiespeicher 32 der ersten Zustelleinrichtung 31 vorgespannt. Die Bremsplatte 22 ist vom Spannbolzen 34 gehalten. Der Spannbolzen 34 ist hierbei mittels eines Hebels 42 über einen Hebelpunkt M vom Elektromagneten 38 gehalten. Der Hebelpunkt M definiert durch die resultierende Hebelaufteilung L1/L2 des Hebels 42 erforderliche Magnetkräfte. Wie in Figur 5c ersichtlich handelt es sich beim Elektromagneten 38 um mehrere Elektromagnete 38a bis 38h, also im Beispiel um acht Teilmagnete. Die Elektromagnete 38a bis 38h sind sternförmig um den Spannbolzen 34 angeordnet und jeder der Elektromagnete 38a bis 38h greift üben einen eigenen Hebel 42 am Spannbolzen an. Somit können kostengünstige Kleinmagnete verwendet werden. Allenfalls genügt eine Teilmenge der Elektromagnete 38, um die Aufzugsbremse in der Betriebsstellung zu halten, während zum Zurückstellen alle Elektromagnete eingeschaltet werden. Die Teilmenge der Elektromagnete könnte im Ausführungsbeispiel bedeuten, dass zwei Elektromagnete 38d, 38h genügen, um die Aufzugsbremse in der Betriebsstellung zu halten. Bei einem Stromlos-Schalten der Elektromagnete 38a - 38h wird der Spannbolzen 34 mit dem Bremsbelag 22 vom Energiespeicher 32 in seine Arbeitsstellung gedrückt, wie in Figur 5b ersichtlich.
Anstelle der sternförmigen Anordnung der Elektromagnete, wie vorgängig erläutert können die Elektromagnete auch parallel angeordnet werden und beispielsweise über ein gemeinsame Hebelanordnung 42, wie in Figur 6 dargestellt auf den Spannbolzen einwirken. Natürlich sind auch Kombinationen der Lösungen möglich. So können auch bei der sternförmigen Anordnung von Figur 5c beispielsweise mehrere Doppelhebel 42 verwendet werden, so dass beispielsweise acht mal zwei Elektromagnete auf den Spannbolzen einwirken können.

Die Elektromagnete 38a bis 38h sind in einer Ausführung durch unterschiedliche Konstruktionsformen ausgeführt. So sind in einer Variante sechs der acht Elektromagnete 38a bis 38h, beispielsweise die Elektromagnete 38a, 38b, 38c, 38e, 38f, 38g als Hubmagnete ausgeführt. Die Hubmagnete erzeugen über eine Linearbewegung eine Hub- oder Zugkraft und sie können so den Energiespeicher 32 spannen. Die Teilmenge von zwei restlichen Elektromagneten 38d, 38h sind als Haftmagnete ausgeführt. Sie sind in der Lage den Energiespeicher 32 in seiner vorgespannten Lage zu halten. Die Hubmagnete können somit nach den Spannen abgeschaltet werden. Die Beispielhafte Ausführung mit acht Elektromagneten ist natürlich vom Fachmann nach Massgabe von erforderlichen Kräften unter Berücksichtigung von Einbauraum und Kosten variierbar. Weitere Kombinationen und Abwandlungen sind möglich. So kann die gezeigte Aufzugbremse natürlich auch als Bremse an einem Antrieb eines Fördersteges oder einer Fahrtreppe angebaut sein.

Im Weiteren kann die zweite Betätigungseinrichtung anstelle des beispielhaft beschriebenen Spindeltriebs auch hydraulische oder pneumatische Elemente enthalten oder die erste Betätigungseinrichtung kann allenfalls auch eine pyrotechnische Aktuatorik beinhalten. In jedem Fall sind die beiden Betätigungseinrichtungen unabhängig von der anderen in der Lage einen Bremsvorgang einzuleiten.

## Patentansprüche

1. Aufzugbremse (20) zum Bremsen und Halten einer Aufzugskabine (2) in einer Aufzugsanlage (1), die Aufzugsbremse beinhaltet einen ersten Bremsbelag (22) mit einer ersten Betätigungseinrichtung (25) und einen zweiten Bremsbelag (21) mit einer zweiten Betätigungseinrichtung (24) wobei der zweite und der erste Bremsbelag (21,22) in einen Abstand zueinander angeordnet sind, so dass ein Bremssteg (9a) einer Führungsschiene (9) der Aufzugskabine (2) oder eine Bremsscheibe eines Aufzugsantriebs zwischen dem zweiten und dem ersten Bremsbelag (21,22) anordnungsbar ist, wobei
die zweite Betätigungseinrichtung (24) ausgelegt ist, um den zweiten Bremsbelag (21) im Bedarfsfall gegen den ersten Bremsbelag (22) zu bewegen und den Bremssteg (9a) oder die Bremsscheibe zwischen dem zweiten und ersten Bremsbelag (21,22) einzuklemmen und zu bremsen, und
die erste Betätigungseinrichtung (25) ausgelegt ist, um den ersten Bremsbelag (22) gegen den zweiten Bremsbelag (21) zu bewegen und den Bremssteg (9a) oder die Bremsscheibe zwischen dem ersten und zweiten Bremsbelag (22,21) einzuklemmen und zu bremsen, **dadurch gekennzeichnet, dass**
die erste Betätigungseinrichtung (25) nach einem ersten Arbeitsprinzip arbeitet und die zweite Betätigungseinrichtung (24) nach einem zweiten Arbeitsprinzip arbeitet, welches zweite Arbeitsprinzip unterschiedlich zum ersten Arbeitsprinzip ist.

2. Aufzugbremse nach Anspruch 1, **dadurch gekennzeichnet, dass**
gemäss dem ersten Arbeitsprinzip die erste Betätigungseinrichtung (25) eine erste Zustelleinrichtung (31) mit einem Energiespeicher (32) beinhaltet, wobei die erste Zustelleinrichtung (31) bei Freigabe einer im Energiespeicher (32) gespeicherten Energie den ersten Bremsbelag (22) zum Bremssteg (9a) oder zur Bremsscheibe zustellt und anpresst, und
gemäss dem zweiten Arbeitsprinzip die zweite Betätigungseinrichtung (24) eine zweite Zustelleinrichtung (26) beinhaltet, welche den zweiten Bremsbelag (21) im Bedarfsfall von einer Bereitschaftsstellung zum Bremssteg (9a) oder zur Bremsscheibe zustellen und anpressen kann und die zweite Betätigungseinrichtung (24) weiter eine zweite Rückstelleinrichtung (27) beinhaltet, welche den zweiten Bremsbelag (21) wiederum in seine Bereitschaftsstellung zurückstellen kann.

3. Aufzugbremse nach Anspruch 1 oder 2, **dadurch gekennzeichnet, dass**
die zweite Zustelleinrichtung (26) eine Zustellregelung (28) beinhaltet, mittels der eine Zustellkraft zumindest in Stufen geregelt werden kann.

4. Aufzugbremse nach Anspruch 2 oder 3, **dadurch gekennzeichnet, dass**
die zweite Zustelleinrichtung (26) der zweiten Betätigungseinrichtung (24) einen Spindeltrieb (29) beinhaltet, und dieser Spindeltrieb (29) mittels Elektromotor (30) getrieben ist, wobei vorzugsweise der Spindeltrieb (29) selbsthemmend ausgeführt ist, so dass er eine jeweils eingestellte Zustellposition ohne Zufuhr von Energie beibehalten kann.

5. Aufzugbremse nach einem der Ansprüche 1 bis 4, **dadurch gekennzeichnet, dass**
die erste Betätigungseinrichtung (25) eine erste Rückstelleinrichtung (33) umfasst, wobei die erste Rückstelleinrichtung (33) einen Spannbolzen (34) beinhaltet der zumindest direkt oder indirekt auf den Energiespeicher (32) der ersten Zustelleinrichtung (31) einwirken kann und der Spannbolzen (34) entweder mittels eines pneumatischen, hydraulischen, elektromotorischen oder magnetischen Hubmittels betätigt werden kann oder der Spannbolzen (34) mittels eines Spannhebels betätigt werden kann, wobei mittels des Spannbolzens (34) der Energiespeicher (32) zusammen mit der zugehörigen ersten Zustelleinrichtung (31) und dem ersten Bremsbelag (22) in seine gespannte Bereitschaftsstellung zurückstellbar ist.

6. Aufzugbremse nach einem der Ansprüche 1 bis 5, **dadurch gekennzeichnet, dass**
die erste Zustelleinrichtung (31) der ersten Betätigungseinrichtung (25) eine vorzugsweise elektro- magnetische Halte- oder Klinkeneinrichtung (36) umfasst, welche den Energiespeicher (32) in geladenem Zustand halten und im Bedarfsfall freigeben kann.

7. Aufzugbremse nach einem der Ansprüche 1 bis 6, **dadurch gekennzeichnet, dass**
der Energiespeicher (32) der ersten Zustelleinrichtung (31) einen Federspeicher beinhaltet und der erste Bremsbelag (22) in seiner Bereitschaftsstellung im Wesentlichen an einem Anschlag (41) anliegt, so dass eine von der zweiten Betätigungseinrichtung (24) über den zweiten Bremsbelag (21) bewirkte Spannkraft über den Anschlag (41) in ein Bremsgehäuse (40) der Aufzugsbremse (20) übertragen werden kann.

8. Aufzugbremse nach einem der Ansprüche 1 bis 7, **dadurch gekennzeichnet, dass**
die zweite Zustelleinrichtung (26) des zweiten Bremsbelags (21) ausgestaltet ist, um den ersten Bremsbelag (22) - nach einer Betätigung desselben - zusammen mit der zugehörigen ersten Zustelleinrichtung (31) und dem Energiespeicher (32) in ihre gespannte Bereitschaftsstellung zurückzudrücken und so den ersten Bremsbelag (22) zurückzusetzen.

9. Aufzugbremse nach einem der Ansprüche 6 bis 8, **dadurch gekennzeichnet, dass**
die vorzugsweise elektromagnetische Halte- oder Klinkeneinrichtung (36) mehrere Elektromagnete (38, 38a - 38h) beinhaltet, welche mittels einer Hebelübersetzung (L1, L2) auf einen Spannbolzen (34) und direkt oder indirekt auf den Energiespeicher (32) der ersten Zustelleinrichtung (31) einwirken können.

10. Aufzugbremse nach Anspruch 9, **dadurch gekennzeichnet, dass**
die mehreren Elektromagnete (38, 38a - 38h) ausgelegt sind, um den Spannbolzen (34) und den Energiespeicher (32) von einer betätigten Lage, bei der der erste Bremsbelag (22) zum Bremssteg (9a) oder zur Bremsscheibe zugestellt ist, in seine gespannte Bereitschaftsstellung zurückzubewegen und so den ersten Bremsbelag (22) zurückzusetzen.

11. Aufzugbremse nach Anspruch 10, **dadurch gekennzeichnet, dass**
eine Teilmenge der mehreren Elektromagnete (38, 38a - 38h) ausgelegt ist, um den Spannbolzen (34) und den Energiespeicher (32) in seiner gespannten Bereitschaftsstellung zu halten und so den ersten Bremsbelag (22) in einer vorbestimmten oder einstellbaren Distanz vom Bremssteg (9a) oder der Bremsscheibe zu halten.

12. Aufzugbremse nach einem der Ansprüche 1 bis 11, **dadurch gekennzeichnet, dass**
ein Zugmittel (43), welches den ersten Bremsbelag (22) in seiner gespannten Bereitschaftsstellung halten kann, einen Poller oder eine Spill (44) umschlingt und mittels mindestens einem Elektromagnet (38) über ein loses Ende des Zugmittels (43) haltbar ist.

13. Aufzugsanlage mit einer entlang einer Führungsschiene (9) verfahrbaren Aufzugskabine (2), **dadurch gekennzeichnet, dass** die Aufzugskabine (2) mit mindestens einer Aufzugbremse (20) nach einem der vorgängigen Ansprüche 1 bis 12 ausgeführt ist und diese Aufzugbremse (20) auf einen an der Führungsschiene (9) angeordneten Bremssteg (9a) einwirken kann.

14. Aufzugsanlage gemäss Anspruch 13, **dadurch gekennzeichnet, dass** die Aufzugbremse (20) eine Zentriereinrichtung (50) aufweist, welche die unbetätigte Aufzugsbremse (20) in einer Bereitschaftsstellung zentriert, so dass der zweite und der erste Bremsbelag (21,22) in einer vorbestimmten oder einstellbaren Distanz von der Führungsschiene (9) angeordnet sind und wobei die Aufzugbremse (20) seitlich verschiebbar an der Aufzugskabine (2) befestigt ist, so dass sie sich unter Wirkung einer von der zweiten und/oder ersten Betätigungseinrichtung (24,25) der Aufzugsbremse (20) erzeugten Anpressung zur Führungsschiene (9) ausrichten kann.

15. Aufzugsanlage gemäss Anspruch 13 oder 14, **dadurch gekennzeichnet, dass** die Aufzugsanlage (1) eine Aufzugssteuerung (10) zur Steuerung der Aufzugsanlage (1) im Normalbetrieb beinhaltet und die Aufzugsanlage (1) weiter eine Überwachungseinrichtung (13) zur Überwachung eines ordnungsgemässen Betrieb der Aufzugsanlage (1) beinhaltet,
wobei die Aufzugssteuerung (10) im Normalbetrieb ausschliesslich die zweite Betätigungseinrichtung (24) der Aufzugsbremse ansteuert oder die Überwachungseinrichtung (13) im Bedarfsfall die zweite Betätigungseinrichtung (24) und/oder die erste Betätigungseinrichtung (25) ansteuert.

## Claims

1. An elevator brake (20) for braking and holding an elevator cab (2) in an elevator system (1), the elevator brake comprising a first brake lining (22) with a first actuating device (25) and a second brake lining (21) with a second actuating device (24), wherein the second and the first brake lining (21, 22) are arranged at a distance from one another, so that a braking strip (9a) of a guide rail (9) of the elevator cab (2) or a brake disc of an elevator drive can be arranged between the first and the second brake lining (21, 22), wherein
the second actuating device (24) is designed to move the second brake lining (21) if necessary towards the first brake lining (22) and to clamp and brake the braking strip (9a) or the brake disc between the second and first brake lining (21, 22), and
the first actuating device (25) is designed to move the first brake lining (22) towards the second brake lining (21) and to clamp and brake the braking strip (9a) or the brake disc between the first and second brake lining (22, 21),
**characterised in that**
the first actuating device (25) operates according to a first principle of operation and the second actuating device (24) operates according to a second principle of operation, which second principle of operation is different from the first principle of operation.

2. The elevator brake according to claim 1, **characterised in that**,
according to the first principle of operation, the first actuating device (25) comprises a first advancing device (31) with an energy store (32), wherein the first advancing device (31) advances the first brake lining (22) towards the braking strip (9a) or the brake disc and presses it against the latter when energy stored in the energy store (32) is released, and
according to the second principle of operation, the second actuating device (24) comprises a second advancing device (26), which advances the second brake lining (21) if necessary from a standby position towards the braking strip (9a) or the brake disc and presses it against the latter and the second actuating device (24) further comprises a second return device (27), which can return the second brake lining (21) back into its standby position.

3. The elevator brake according to claim 1 or 2, **characterised in that**
the second advancing device (26) comprises an advancing control (28), by means of which an advancing force can be controlled at least in steps.

4. The elevator brake according to claim 2 to 3, **characterised in that**
in the second advancing device (26) of the second actuating device (24) comprises a spindle drive (29), and this spindle drive (29) is driven by means of an electric motor (30), wherein the spindle drive (29) is preferably constituted self-locking, so that it can maintain an advanced position that has been set at the time without the supply of energy.

5. The elevator brake according to any one of claims 1 to 4, **characterised in that**
the first actuating device (25) comprises a first return device (33), wherein the first return device (33) comprises a tension bolt (34), which can act at least directly or indirectly on the energy store (32) of the first advancing device (31) and the tension bolt (34) can be actuated either by means of a pneumatic, hydraulic, electromotive or magnetic lifting means or the tension bolt (34) can be actuated by means of a tension lever, wherein the energy store (32) together with the associated first advancing device (31) and the first brake lining (22) can be returned by means of the tension bolt (34) into its tensioned standby position.

6. The elevator brake according to any one of claims 1 to 5, **characterised in that**
the first advancing device (31) of the first actuating device (25) comprises a preferably electromagnetic holding or catch device (36), which can hold the energy store (32) in the loaded state and release it if necessary.

7. The elevator brake according to any one of claims 1 to 6, **characterised in that**
the energy store (32) of the first advancing device (31) comprises a spring accumulator and the first brake lining (22) in its standby position lies essentially adjacent to a stop (41), so that a tensioning force brought about by the second actuating device (24) via the second brake lining (21) can be transferred via the stop (41) into a brake housing (40) of the elevator brake (20).

8. The elevator brake according to any one of claims 1 to 7, **characterised in that**
the second advancing device (26) of the second brake lining (21) is designed to push the first brake lining (22) - after actuation thereof - together with the associated advancing device (31) and the energy store (32) back into its tensioned standby position and thus to return the brake lining (22).

9. The elevator brake according to any one of claims 6 to 8, **characterised in that**
the preferably electromagnetic holding and catch device (36) comprises a plurality of electromagnets (38, 38a - 38h), which by means of a lever transmission (L1, L2) can act on the tension bolt (34) and directly or indirectly on the energy store (32) of the first advancing device (31).

10. The elevator brake according to claim 9, **characterised in that**
the plurality of electromagnets (38, 38a - 38h) are designed to move the tension bolt (34) and the energy store (32) from an actuated position, in which the first brake lining (22) is advanced towards the braking strip (9a) or the brake disc, back into its tensioned standby position and thus to return the first brake lining (22).

11. The elevator brake according to claim 10, **characterised in that**
a partial quantity of the plurality of electromagnets (38, 38a - 38h) is designed to hold the tension bolt (34) and the energy store (32) in its tensioned standby position and thus to hold the first brake lining (22) at a predetermined or adjustable distance from the braking strip (9a) or the brake disc.

12. The elevator brake according to any one of claims 16 to 11, **characterised in that** a traction means (43), which can hold the first brake lining (22) in its tensioned standby position, is looped around a bollard or a capstan (44) and, via a free end of the traction means (43), is held by means of the at least one electromagnet (38).

13. An elevator system with an elevator cab (2) which can be traversed along a guide rail (9), **characterised in that** the elevator cab (2) is constituted with at least one elevator brake (20) according to any one of preceding claims 1 to 12 and this elevator brake (20) can act on a brake web (9a) arranged on the guide rail (9).

14. The elevator system according to claim 13, **characterised in that** the elevator brake (20) comprises a centring device (50), which centres the non-actuated elevator brake (20) in a standby position, so that the second and the first brake lining (21, 22) are arranged at a predetermined or adjustable distance from the guide rail (9), and wherein the elevator brake (20) is fixed laterally displaceable to the elevator cab (2), so that it can be aligned with respect to the guide rail (9) under the effect of a contact pressure generated by the second and/or first actuating device (24, 25) of the elevator brake (20).

15. The elevator system according to claim 13 or 14, **characterised in that** the elevator system (1) comprises an elevator control (10) for controlling the elevator system (1) in the normal operation and the elevator system (1) also comprises a monitoring device (13) for monitoring correct operation of the elevator system (1),
wherein the elevator control (10) triggers solely the second actuating device (24) of the elevator brake in the normal operation or the monitoring device (13) triggers the second actuating device (24) and/or the first actuating device (25) if necessary.

## Revendications

1. Frein d'ascenseur (20) destiné à freiner et arrêter une cabine d'ascenseur (2) dans une installation d'ascenseur (1), le frein d'ascenseur comprenant une première garniture de frein (22) munie d'un premier moyen d'actionnement (25) et une seconde garniture de frein (21) munie d'une second moyen d'actionnement (24), la seconde et la première garniture de frein (21, 22) étant disposées à une distance l'une de l'autre de sorte qu'une nervure de frein (9a) d'un rail de guidage (9) de la cabine d'ascenseur (2) ou un disque de frein d'un entraînement d'ascenseur peut être disposé entre la seconde et la première garniture de frein (21,22),
le second moyen d'actionnement (24) étant conçu pour déplacer la seconde garniture de frein (21), si besoin est, contre la première garniture de frein (22) et pour serrer la nervure de frein (9a) ou le disque de frein entre la seconde et la première garniture de frein (21, 22) et pour freiner, et
le premier moyen d'actionnement (25) étant conçu pour déplacer la première garniture de frein (22) contre la seconde garniture de frein (21) et pour serrer la nervure de frein (9a) ou le disque de frein entre les première et seconde garnitures de frein (22,21) et pour freiner,
**caractérisé en ce que**
le premier moyen d'actionnement (25) fonctionne selon un premier principe de fonctionnement et le second moyen d'actionnement (24) fonctionne selon un second principe de fonctionnement, lequel second principe de fonctionnement est différent du premier principe de fonctionnement.

2. Frein d'ascenseur selon la revendication 1, **caractérisé en ce que**,
selon le premier principe de fonctionnement, le premier moyen d'actionnement (25) comprend un premier moyen d'avance (31) comprenant un accumulateur d'énergie (32), le premier moyen d'avance faisant avancer et pressant, lors de la libération de l'énergie stockée dans l'accumulateur d'énergie (32), la première garniture de frein (22) vers la nervure de frein (9a) ou le disque de frein, et
selon le second principe de fonctionnement, le second d'actionnement (24) comprend un second d'avance (26) qui peut faire avancer et presser, si besoin est, la seconde garniture de frein (21) d'une position d'attente vers la nervure de frein (9a) ou le disque de frein et le second moyen d'actionnement (24) comprend en outre un second moyen de rappel (27) qui peut ramener la seconde garniture de frein (21) dans sa position d'attente.

3. Frein d'ascenseur selon la revendication 1 ou 2, **caractérisé en ce que** le seconde moyen d'avance (26) comprend une commande d'avance (28) au moyen de laquelle une force d'avance peut être réglée au moins par étapes.

4. Frein d'ascenseur selon la revendication 2 ou 3, **caractérisé en ce que** le second moyen d'avance (26) du second moyen d'actionnement (24) comprend un entraînement à broche (29) et cet entraînement à broche (29) est entraîné par un moteur électrique (30), l'entraînement à broche (29) étant de préférence autobloquant de sorte qu'il peut maintenir, sans apport d'énergie, une position d'avance réglée à chaque fois.

5. Frein d'ascenseur selon l'une des revendications 1 à 4, **caractérisé en ce que** le premier moyen d'actionnement (25) comprend un premier moyen de rappel (33), le premier moyen de rappel (33) comprenant un boulon de serrage (34) qui peut agir au moins directement ou indirectement sur l'accumulateur d'énergie (32) du premier moyen d'avance (31) et soit le boulon de serrage (34) peut être actionné au moyen d'un moyen de levage pneumatique, hydraulique, électromoteur ou magnétique soit le boulon de serrage (34) peut être actionné au moyen d'un levier de serrage, l'accumulateur d'énergie (32) pouvant être ramené, au moyen du boulon de serrage (34), conjointement avec le premier moyen d'avance correspondant (31) et la première garniture de frein (22) dans sa position d'attente sous contrainte.

6. Frein d'ascenseur selon l'une des revendications 1 à 5, **caractérisé en ce que** le premier moyen d'avance (31) du premier moyen d'actionnement (25) comprend un moyen de retenue ou d'encliquetage (36), de préférence électromagnétique, qui peut maintenir l'accumulateur d'énergie (32) dans un état chargé et qui peut le libérer si besoin est.

7. Frein d'ascenseur selon l'une des revendications 1 à 6, **caractérisé en ce que** l'accumulateur d'énergie (32) du premier moyen d'avance (31) comprend un accumulateur à ressort et la première garniture de frein (22) est en appui, dans sa position d'attente, sensiblement sur une butée (41) de sorte qu'une force de serrage, produite par le second moyen d'actionnement (24) par le biais de la seconde garniture de frein (21), peut être transmise par le biais de la butée (41) dans un boîtier de frein (40) du frein d'ascenseur (20).

8. Frein d'ascenseur selon l'une des revendications 1 à 7, **caractérisé en ce que** le second moyen d'avance (26) de la seconde garniture de frein (21) est conçu pour repousser la première garniture de frein (22), après son actionnement, conjointement avec le premier moyen d'avance associé (31) et l'accumulateur d'énergie (32), dans sa position d'attente sous contrainte et pour ramener la première garniture de frein (22).

9. Frein d'ascenseur selon l'une des revendications 6 à 8, **caractérisé en ce que** le moyens de retenue ou d'encliquetage (36), de préférence électromagnétique, comprend une pluralité d'électro-aimants (38, 38a à 38h) qui peut agir, au moyen d'une transmission à levier (L1, L2), sur un boulon de serrage (34) et directement ou indirectement sur l'accumulateur d'énergie (32) du premier moyen d'avance (31).

10. Frein d'ascenseur selon la revendication 9, **caractérisé en ce que** la pluralité d'électro-aimants (38, 38a à 38h) sont conçus pour ramener le boulon de serrage (34) et l'accumulateur d'énergie (32) d'une position actionnée, dans laquelle la première garniture de frein (22) est avancée vers la nervure de frein (9a) ou le disque de frein, dans sa position d'attente sous contrainte et ramener ainsi la première garniture de frein (22).

11. Frein d'ascenseur selon la revendication 10, **caractérisé en ce qu'**une partie de la pluralité d'électro-aimants (38, 38a à 38h) est conçue pour maintenir le boulon de serrage (34) et l'accumulateur d'énergie (32) dans son position d'attente sous contrainte et maintenir ainsi la première garniture de frein (22) à une distance prédéterminée ou réglable de la nervure de frein (9a) ou du disque de frein.

12. Frein d'ascenseur selon l'une des revendications 1 à 11, **caractérisé en ce qu'**un moyen de traction (43), qui peut maintenir la première garniture de frein (22) sous contrainte dans sa position d'attente, passe autour d'un bollard ou d'un cabestan (44) et peut être maintenu par l'intermédiaire d'une extrémité lâche du moyen de traction (43) au moyen d'au moins un électro-aimant (38).

13. Installation d'ascenseur comprenant une cabine d'ascenseur (2) mobile le long d'un rail de guidage (9), **caractérisée en ce que** la cabine d'ascenseur (2) peut être équipée d'au moins un frein d'ascenseur (20) selon l'une des revendications précédentes 1 à 12 et ce frein d'ascenseur (20) peut agir sur une nervure de frein (9a) disposée au niveau du rail de guidage (9).

14. Installation d'ascenseur selon la revendication 13, **caractérisée en ce que** le frein d'ascenseur (20) comporte un moyen de centrage (50) centrant le frein d'ascenseur (20) non actionné dans une position d'attente de sorte que les seconde et première garnitures de frein (21,22) sont disposées à une distance prédéterminée ou réglable du rail de guidage (9) et le frein d'ascenseur (20) étant fixé à la cabine d'ascenseur (2) de manière coulissante latéralement de façon à être orienté par rapport au rail de guidage (9) par une pression produite par le second et/ou le premier moyen d'actionnement (24,25) du frein d'ascenseur (20).

15. Installation d'ascenseur selon la revendication 13 ou 14, **caractérisée en ce que** l'installation d'ascenseur (1) comprend une commande d'ascenseur (10) destinée à commander l'installation d'ascenseur (1) en fonctionnement normal et l'installation d'ascenseur (1) comprend en outre un moyen de surveillance (13) destiné à surveiller le bon fonctionnement de l'installation d'ascenseur (1),
la commande d'ascenseur (10) commandant en fonctionnement normal exclusivement le second moyen d'actionnement (24) du frein d'ascenseur ou le moyen de surveillance (13) commandant si besoin est le second moyen d'actionnement (24) et/ou le premier moyen d'actionnement (25).
